# EUROPEAN PATENT APPLICATION

(11) **EP 2 116 967 A1**
(43) Date of publication of application: **11.11.2009**
(21) Application number: 09158356.7
(22) Date of filing: 21.04.2009
(51) Int. Cl.: G06Q 10/00

(54) **Apparatus, and associated method, for facilitating data-center management**

(30) Priority: 06.05.2008 US 115943
(71) Applicant: HEWLETT-PACKARD DEVELOPMENT COMPANY, L.P., Houston, TX 77070 (US)
(72) Inventor: Rose, John F., Burwood, NSW 2134 (AU)
(74) Representative: Franks, Adam Peter

(57) **Abstract**

An apparatus, and an associated methodology, automatically monitors operations at a data center. A metric obtainer collects metrics associated with operation of entities maintained or operated at the data center. The collected metrics are stored at a database whose contents are accessible by an analyzer. The analyzer analyzes the collected data. Analyses are used to manage operations at the data center.

## Description

The present invention relates generally to a manner by which automatically to monitor operations of a data center. More particularly, the present invention relates to an apparatus, and an associated method, by which to collect metrics of data-center operations, such as during its operation in a production environment, to analyze the metrics, once collected, and to facilitate management of the data-center responsive to analysis of the metrics.

Analysis of the collected metrics is used in the estimation of the carbon footprint associated with data-center operations, such as execution of applications at computer-system devices. And, management is carried out, e.g., to optimize a performance criteria, such as optimization of the carbon-footprint of a data-center operation.

### Background of the Invention

Access to, and use of, computer systems is a practical necessity in modem society. Computer devices and systems are accessed and utilized for many business, and other enterprise, functions as well as for non-business related functions.

Groups of computer stations are sometimes interconnected to form networks of computers, both in local area networks as well as in wide area networks. When so-connected, the computer stations are able to send data to another computer station or receive data from another computer station. Data retrieval operations are carried out, e.g., pursuant to a request/response procedure. Data is sometimes stored at, and retrieved from computer servers.

A computer server is a computer station that, typically, has a relatively large storage capacity at which data is stored. Data stored at the computer server is at least selectably accessible by other computer stations, such as pursuant to the request/response procedure. A computer server is sometimes relatively costly, particularly when the computer server is of storage capacity permitting its storage of large amount of data with many read and write operations performed thereon. Data that is stored at a computer server is sometimes of a proprietary or confidential nature. And, multiple servers are sometimes used, both to increase redundancy and to increase system capacity.

For both security as well as cost reasons, the data servers are sometimes maintained at a data center. Other computer-system devices are also, for analogous reasons, also maintained at a data center. A data center, formed of one or more installations, is typically maintained at controlled temperature and humidity levels to ensure best that ambient conditions at the data center do not interfere with computer operations of the computer-system devices positioned at the data center. A data center is, typically, a segregated facility, i.e., a physically isolated facility. The data center, for instance, forms a separate structure or housing at which the data-center, computer devices are maintained. Access to devices maintained at the data center is provided by way of the aforementioned network connections. Access-control, such as that provided by a firewall or gate controller permits access to the devices at the data center only to data requestors that are authenticated or otherwise authorized.

Computer-system devices are power consumptive, requiring a supply of electrical energy to power their operation. The electrical power is typically provided by a power grid through which electrical power is transmitted by one or more original power providers that service the area in which an installation of the data center is positioned. Sometimes, the data center installation is located in an area that provides power redundancy, i.e., power supplied by more than one power provider. In the event of power failure by one of the power providers, continued operations at the data center are possible due to the redundancy of power providers. Power providers generate electrical power in carious manners, often times using carbon-based fuels that are ignited an burned to generate power.

Many in the scientific, and other communities have voiced concern about climate change resulting from man made, carbon emissions, such as the carbon emissions that are generated during power generation by power-generative facilities that utilization carbon-based fuels. And, various efforts are starting to be made to reduce carbon emissions. A reduction in the power required to perform a function would, for instance, reduce the carbon footprint of that function. In the aggregate, potentially significant reductions in carbon emissions would be achievable.

At a data center, computer functions and other tasks might well be carried out by any of various computer system devices. Carrying out of the function at a particular one, or group, of the devices, or at a different data center, might require lesser amounts of energy, and hence smaller carbon footprint, than if carried out by another device, or group of devices. Selections as to where to carry out a computer function at a data center in a dynamic, production environment prevents various challenges. Data metrics must be collected and analyzed for a potentially large number of computer devices over a course of time. And, allocations of functions and tasks are made.

More generally, metrics must be obtained during the dynamic, production environment of an operating data center for any of various other purposes including, e.g., the tracking of the performance of the data center. However, conventially, selection of such data metrics is carried out manually or otherwise in a manually-intensive manner.

If an improved manner could be provided by which better to collect the data metrics, their analysis, and resultant management of a data center would be facilitated.

It is in light of this background information related to data centers that the significant improvements of the present invention have evolved.

### Summary of the Invention

The present invention, accordingly, advantageously provides an apparatus, and an associated method, by which automatically to monitor operations of a data center. Through operation of an embodiment of the present invention, a manner is provided by which to collect metrics of data-center operation, such as during its operation in a production environment, to analyze collected metrics, and to facilitate management of the data center responsive to analysis of the metrics.

In one aspect of the present invention, analysis of the collected metrics includes analysis and estimation of the carbon foot print associated with data-center operations. Management is carried out, e.g., to optimize the carbon footprint of a data-center operation.

In another aspect of the present invention, metrics are collected during operation of the data center. The metrics are collected automatically without need of manual collection of the data metrics. The metrics that are collected include metrics related to CPU, DASD and tape for MVS applications as well as any of various additional metrics of interest.

In another aspect of the present invention, a data base is provided at a storage element and is populated with collected values of the data metrics. As the collection of the metrics is performed as an ongoing process during operation of the data-center devices of the data center in a production environment, the metric collection is potentially an on going, and non-terminating, process. The contents of the database are accessible to obtain information identifying various aspects of the data center operation.

In another aspect of the present invention, the metrics that are collected and stored at the data base include metrics associated with application performance of applications running at the data center, data center power overhead consumption, equipment power consumption, equipment capacity, and other application-related metrics. Additional metrics associated with the carbon footprint of the data center, vis-a-vis other data centers are also collected and stored at the data base.

In another aspect of the present invention, the collected metrics are accessed and analyzed. An analyzer retrieves the values of the metrics collected and stored at the data base. Any of various analysis are performed upon the retrieved metric values. An analysis is performable, for instance, to track the performance of production applications performed at the data center and to perform analysis to identify candidate devices or applications amenable for reengineering.

In another aspect of the present invention, the analysis is preformed in order to calculate the carbon footprint, i.e., the "green" footprint, of a selected application that executes at a particular data center. The analysis is performed, for instance, by relating computing resources that are used to carry out the selected application to the type of power supplied to the data center. Indicia pertaining to the carbon footprint of the application alternately, or additionally, identifies the changing carbon footprint of the application.

In another aspect of the present invention, the analysis predicts future behavior of operation of the data center and application executed thereat. The predictive behavior provides, for instance, predictive carbon emissions to carry out anticipated applications at data-center devices.

In another aspect of the present invention, the predictive analysis of the data center operations, based upon the collected metrics, is performed to provide comparative cost modeling, such as comparative carbon-footprint cost modeling. The modeling provides comparisons of predictive behavior of application execution at different data-center devices, performance of different applications to carry out a particular function, etc. The comparative modeling provides model results that, when analyzed, identify a data-center device, or an application, that exhibits a smallest carbon footprint.

In another aspect of the present invention, a data-center manager makes use of the analyzed metrics. The manager performs management functions responsive to the analysis made of the collected metrics. The operations at the data center are managed, e.g., to optimize a performance criteria. For instance, the management is carried out to control application execution in a manner that minimizes the carbon footprint of the application in its execution.

When implemented, the automatic management facilitates production support. The automatic monitoring tracks changes to an application execution, identifying resources used, detecting application-execution issues, and shows changes in performance and carbon footprint as a result of application changes.

The automatic monitoring provides estimates of savings from running an application at a particular data center, e.g., a data center run by a particular data-center operator rather than another data center. The automatic monitoring, and its analysis responsive to collection of data metrics. Data-center sales personnel are able, e.g., to quantify advantages of their associated data center relative to another data center.

Operation of the automatic monitoring also is usable in the generation of released documents required in application development. Code comparisons, performance analysis, automated impact analysis, monitoring of newly-implemented applications or enhancements to existing application also makes use of metrics collected during operation.

In these and other aspects, therefore, an apparatus, and an associated method, is provided for facilitating operation of a data center. A metric obtainer is configured automatically to obtain data-center metrics associated with operations of the data center. An analyzer is configured to analyze the data-center metrics obtained by the metric obtainer. A manager is configured to manage the operations of the data center responsive to analysis made by the analyzer. Management of the operations is made to optimize a performance criteria.

A more complete appreciation of the scope of the present invention and into the manner in which it achieves the above-noted and other improvements can be obtained by reference to the following detailed description of presently-preferred embodiments taken in connection with the accompanying drawing that are briefly summarized below, and by reference to the appended claims.

### Brief Description of the Drawings

Figure 1 illustrates a functional block diagram of an arrangement having a data center that includes an embodiment of the present invention operable thereat.

Figure 2 illustrates a functional block diagram of automatic monitoring apparatus of an embodiment of the present invention.

Figure 3 illustrates a functional block diagram of another arrangement at which an embodiment of the present invention is operable.

Figure 4 illustrates a method flow diagram representative of the method of operation of an embodiment of the present invention.

### Detailed Description

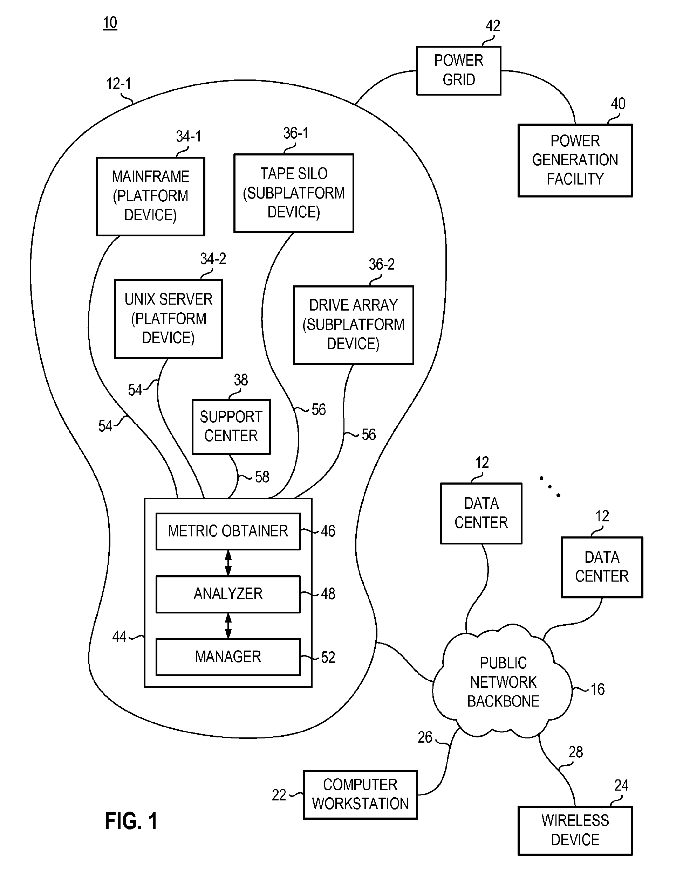

Referring first, therefore, to Figure 1, an arrangement, shown generally at 10, includes a plurality of data centers 12, including a local data center 12-1. The data centers 12 are positioned, for instance, at disparate locations, including locations that are widely separated, e.g., located in different countries or different continents. A data center is typically operated by a business, or other, enterprise. And, the same enterprise sometimes operates multiple, disparately-located data centers. More generally, the data centers 12 shown in the figure are representative of any group of data centers, whether commonly-operated, or wholly-independently operated. Additionally, while not shown in detail, others of the data centers 12 include structure analogous to that shown to form part of the local data center 12-1.

The data centers shown in the exemplary illustration of Figure 1 permit controlled, external access thereto by way of network connections, here represented by a public-network backbone 16, such as the internet. Access to the data center is limited, for instance, to a requestor that has been properly authenticated pursuant to authentication procedures to be a party permitted access to an entity at the data center and properly proven to be the identified party. More generally, a data center is almost any collection of computing environments at a location. A data center is therefore definable, and formed at, e.g., a branch or sales office of an enterprise. A requestor comprises, for instance, a user of a computer work station 22 or a wireless device 24 that is in communication connectivity with the data network backbone and, in turn, with the data center. The lines 26 and 28 are representative of communication paths that are formable between the devices 22 and 24, respectively, and the network backbone 16. The line 26 is representative, e.g., of a wire line connection, and the line 28 is representative, e.g., of an EDGE (Enhanced Data for GSM Evolution) radio connection, a WIFI connection, etc. The devices 22 and 24 are exemplary. And, other devices, connected in other manners, are analogously permitted controlled access to entities at the data center.

Data centers are further placeable in communication connectivity by way of the network backbone. Data and processing commands are communicated, when needed, therebetween by way of the network backbone. In alternate implementations private dedicated, and other interconnections provide for other types of communication connectivity between the data centers or the devices 22 and 24.

The local data center 12-1, as well as others of the data centers 12, are typically implemented at segregated work areas that provide for the control of the ambient environment. The temperature and humidity levels at the data center are maintained within a range best to ensure operation of the computer-system devices maintained at the data center. More generally, the data center is an area at which computer-system and related, entities are positioned. Entities positioned at the local data center 12-1 include platform devices 34, such as a mainframe computer 34-1 and a UNIX server 34-2. And, the data center further includes subplatform devices 36, here, e.g., a tape silo 36-1 and a drive ray 36-2. A support center 38 here further forms a portion of the data center 12-1. Additional, and other computer-system, and related, devices are so maintained at data centers. And, while only as small number of exemplary devices 34, 36, and 38 are illustrated at the local data center 12-1, in a typical implementation, greater numbers of entities are maintained, accessed, and operated at a typical data center.

The data center 12-1 is powered by a power generated by a power-generation source 40 whose generated power is provided to the data center by way of the power grid 42.

As noted previously, tracking of operations at a data center has become increasingly difficult as the processing and storage capabilities of entities maintained thereat increase. Many thousands of metrics conventionally must be collected covering thousands of executing jobs and files. To overcome this existing, and increasingly problematic issue, the data center further includes an apparatus 44 of an embodiment of the present invention. In the exemplary implementation, the apparatus is embodied at a computer server, and the terms "apparatus" and "server" 44 shall be, at times used interchangeably herein. It should be understood, however, that the functions provided by the apparatus 44 are analogously implementable in other manners, in both hardware and software configurations, and are embodied at structure other than a computer server. The apparatus 44 provides for automatic monitoring of operations at the data center, including when the data center is in a production environment, i.e., is running tasks and applications to process data and to store and retrieve data.

The apparatus is functionally represented and here is shown to include a metric obtainer 46, an analyzer 48, and a manager 52. The apparatus is positioned in communication connectivity with the entities 34, 36, and 38 of the data center as well as, in one implementation, with other data centers. Here, the lines 54 extend between the server 44 and the platform entities 34, the lines 56 extend between the server 44 and the sub platform entities 36, and the line 58 extends between the apparatus 44 and the support center 38.

The communication connectivity maintained between the entities and the apparatus 44 provide for collection by the metric obtainer of metrics associated with the operation of the entities or data stored or processed thereat. The metric obtainer collects the metrics automatically, over a time period, such as at selected intervals responsive to triggering events. The apparatus further includes a database 56 at which the metrics are stored. Values stored at the data base 56 are subsequently accessible by the analyzer 48.

The analyzer performs any of various analyses of the collected metrics. The collected metrics cover, e.g., application performance, data-center, power-overhead consumptions, equipment power consumption, equipment capacity, and application metrics, as well as other metrics.

In exemplary operation, the analyzer combines collected metrics, collected by the metric obtainer 46 and stored at the database 56 in order to calculate the carbon footprint of a selected application, executing at a particular data center. The analysis, for instance, relates computing resources used in the type of power supply, here the power supply sourced at the power source 42 and provided to the data center by way of the power grid 44.

In the exemplary implementation, the analyzer further performs analysis of the collected metrics in order to analyze changes to the carbon footprint of execution of an application, or other operation at the data center. Additionally, in a further, or other, implementation, the analyzer further performs predictive functions and, e.g., predicts future carbon, i.e., green, footprints of anticipated running of applications. Predictive results are used, for instance, for purposes of comparative, or other, cost modeling. Cost modeling includes, a comparative carbon-footprint modeling.

Further pursuant to the predictive functionality of the analyzer, the analyzer is able to rate, or otherwise score, the modelings of the executions.

Results of analyses made by the analyzer are provided to the manager 52. The manager operates to manage various operations of the data center responsive to analysis made by the analyzer. In the exemplary implementation in which the analyzer predicts comparative carbon-emission cost modeling, the manager operates to manage application execution to minimize the carbon footprint of its execution. That is to say, the manager 52 operates to optimize a performance criteria at the data center. In further, or alternate, operation, the manager performs other, or additional, management functions. For instance, the manager further optimizes back up, archive, and purge applications in order to minimize data flows and reduce tape usage, or otherwise optimize the data-center operations.

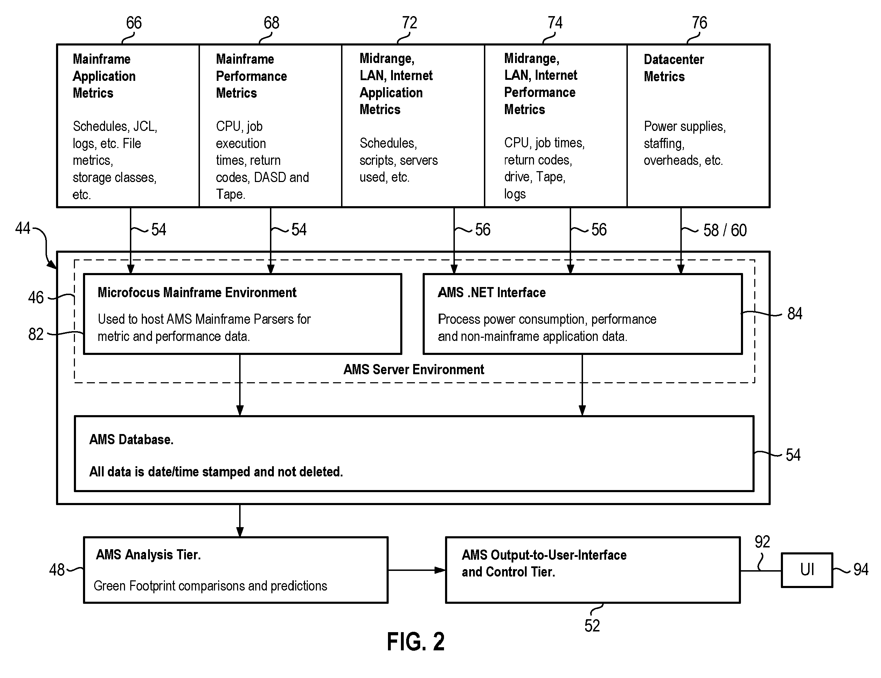

Figure 2 illustrates a representation of the apparatus 44. Lines 54, 56, 58, and 60 are again shown to extend to the metric collector 46. A first line 54 extending to the apparatus 44 is representative of mainframe application metrics 66, e.g., metrics relating to schedules, JCL, logs, file metrics, storage classes, etc. Metrics provided of the second one of the lines 54 are indicated at 68 to include mainframe performance metrics, such as CPU, job execution times, return codes, DASD, and tape metrics.

Metrics provided on a first of the lines 56 to the apparatus 44 are represented at 72 to comprise mid range, LAN, and internet application metrics, such as schedules, scripts, servers used, etc. Metrics provided by way of a second of the lines 56 are represented at 74, indicated to comprise mid range, LAN, and internet performance metrics, such as CPU, job times, return codes, drive, tape, and logs. And, the metrics provided by way of the line 58/60 are represented at 76, indicated to comprise data center metrics, such as power supply metrics, staffing metrics, overhead, etc.

The metric obtainer 46 is here shown to include a micro focus mainframe environment entity 82 and an AMS (Automatic Monitoring System).netinterface84. The entity 82 is used to host AMS mainframe parsers for the receipt of metric and performance data. And, the entity 84 is configured to process power consumption, performance, and non-mainframe application data. Collected metrics are provided to the data base 54 for storage thereat. All of the collected data metrics are date and time stamped. The data base is embodied at a storage element of storage capacity permitting storage of the collected metrics without deletion of prior-stored metric values.

The analyzer 48 accesses the values of the metric stored at the data base and utilizes the values pursuant to analysis functions. The analysis, in the exemplary implementation, include at least analysis to perform predictive comparisons and predictions related to carbon-footprints of application execution. Indications of the analysis are provided to the manager 52, here forming a control tier and also indicated by the arrow 92 to a user interface 94 for viewing.

Because the metrics are automatically collected and analyzed, problems associated with manual collection of data, or related to a data center, are significantly reduced. Better analysis, using automatically collected metric values is possible, thereby better to optimize a performance criteria, such as minimization of a carbon-footprint of execution of an application.

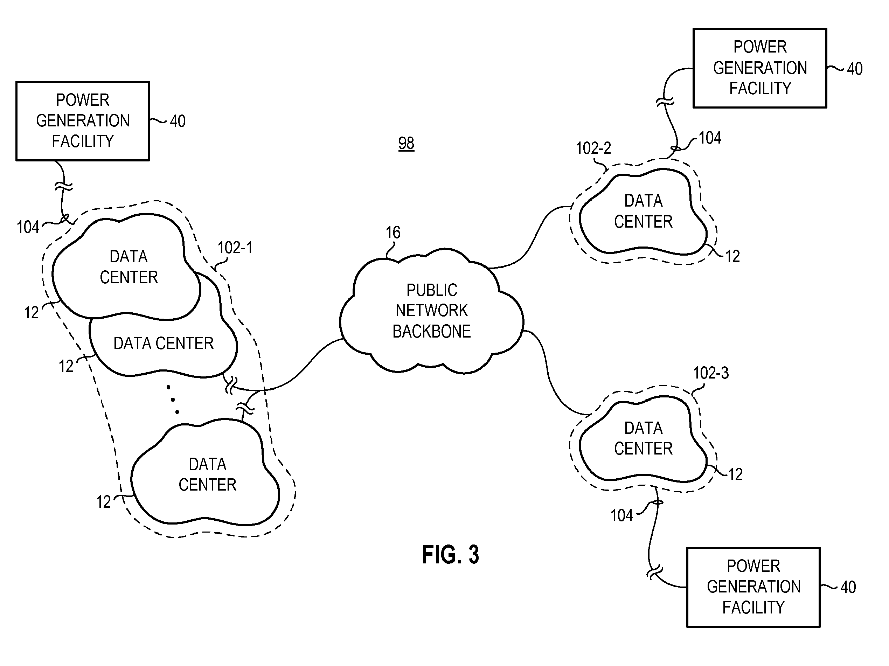

Figure 3 illustrates an arrangement, shown generally at 98 that also includes a plurality of data centers 12. Each of the data centers is a collection of computing environments. One or more data centers form a site 102. The site 102-1 is formed of a plurality of data centers 12 and the sites 102-2 and 102-3 each are comprised of a single data center 12. Each site 102 has a metered power supply 104. That is to say, each site is connected to a power source, here represented by the power generation facilities 40, and the metered power supplies 104 are representative of physical, or other, power meters from which directly-traceable electricity bills are derivable. For instance, relations of power consumption calculations back to actual invoices are determinable.

One or more of the data centers 12 include the apparatus 44, shown in Figure 1-2. The apparatus forms an application monitoring system, operable in manners as described above, e.g., to control a data center to minimize its carbon footprint. For instance, operation of the apparatus 44 is used as a control system to reduce the carbon footprint of a data center by turning off unused equipment and causing out-of-hours shut downs of power-consumptive elements at a data center, such as the air conditioning, phone system, lighting, etc.

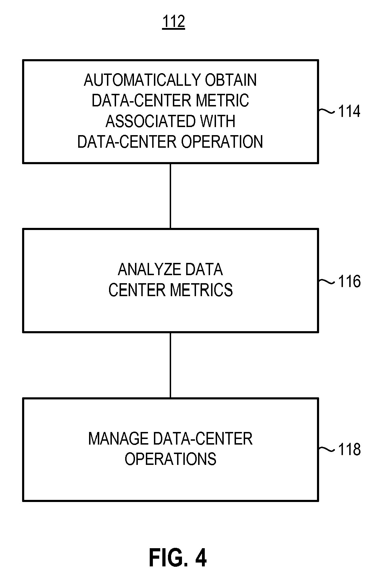

Figure 4 illustrates a method flow diagram, shown generally at 112, representative of the method of operation of an embodiment of the present invention. The method 112 facilitates operation of a data center.

First, and as indicated by the block 114, data-center metrics are automatically obtained. The data-center metrics are associated with operations of the data center. And, as indicated by the block 116 the data-center metrics are analyzed.

And, as indicated by the block 118, operations of the data center are managed responsive to analysis of the data-center metrics. Management of the operations is carried out to optimize a performance criteria.

Thereby, a manner is provided by which automatically to monitor operations at a data center in a production environment. Data metrics are collected and analyzed. And results of the analysis are used to manage operations at the data center. Monitoring is carried out while the data center is operated in a production environment, and management includes, e.g., calculation and prediction of the carbon-footprint of application execution and other operations at the data center.

Presently preferred embodiments of the invention and many of its improvements and advantages have been described with a degree of particularity. The description is of preferred examples of implementing the invention and the description of preferred examples is not necessarily intended to limit the scope of the invention. The scope of the invention is defined by the following claims.

## Claims

1. An apparatus for facilitating operation of a data center, said apparatus comprising:
a metric obtainer configured automatically to obtain data-center metrics associated with operations of the data center;
an analyzer configured to analyze the data-center metrics obtained by said metric obtainer; and
a manager configured to manage the operations of the data center response, to analysis made by said analyzer, management of the operations made to optimize a performance criteria.

2. The apparatus of claim 1 wherein said manager is configured to manage the operations to optimize a carbon footprint of the data center.

3. The apparatus of claim 1 or 2, wherein said metric obtainer is configured automatically to obtain application performance related metrics.

4. The apparatus of claim 1, 2, or 3, wherein said metric obtainer is configured automatically to obtain data center power consumption related metrics.

5. The apparatus of claim 1, 2, 3 or 4, wherein said metric obtainer is configured automatically to obtain data center equipment related metrics.

6. The apparatus of any preceding claim, further comprising a database configured to store data center metrics obtained by said metric obtainer.

7. The apparatus of claim 6 wherein said analyzer is configured to analyze data-center metrics retrieved from said database.

8. The apparatus of any preceding claim, wherein said analyzer is further configured to perform predictive analysis of the data-center metrics.

9. The apparatus of any preceding claim, wherein said analyzer is further configured to analyze changes of a green footprint of the data center.

10. The apparatus of any preceding claim, wherein said analyzer is further configured to perform cost modeling.

11. A method for facilitating operation of a data center, said method comprising:
automatically obtaining data-center metrics associated with operations of the data center;
analyzing the data-center metrics; and
managing the operations of the data center responsive to analysis of the data center metrics, management of the operations made to optimize a performance criteria.

12. The method of claim 11, wherein said managing comprises managing the operations of the data center to optimize a green footprint of the data center.

13. The method of claim 12, wherein said analyzing further comprises predicting a data center green footprint pursuant to a modeled data-center use configuration.

14. The method of claim 12 or 13, wherein said analyzing further comprises performing comparative cost modeling.

15. Monitoring apparatus for monitoring operations at a data center, aid monitoring apparatus comprising:
a server-based data collector configured to collect data-center metrics during production-environment operation of the data center; and
a calculator configured to generate carbon-footprint related indicia associated with data-center operation using the data-center metrics collected by said server-based data collector.
